# EUROPEAN PATENT APPLICATION

(11) **EP 4 826 352 A1**
(43) Date of publication of application: **21.10.2026**
(21) Application number: 24904379.5
(22) Date of filing: 11.12.2024
(51) Int. Cl.: G01N 3/00

(54) **EXPRESSION METHOD OF STRENGTH VARIATION PROPERTY**

(30) Priority: 12.12.2023 KR 20230179791
(71) Applicant: POSCO Co., Ltd, Gyeongsangbuk-do 37859 (KR)
(72) Inventor: LIM, Ji-Ho, Incheon 21985 (KR); LEE, Hae-A, Incheon 21985 (KR)
(74) Representative: Meissner Bolte Partnerschaft mbB
(86) International application number: PCT/KR2024/096743
(87) International publication number: WO 2025/127814

(57) **Abstract**

The present invention relates to a method for expressing physical properties when there is a change in strength in the plastic region of an elastic material, the method including: a region setting step of setting, in a first material and a second material obtained by pre-straining and heat-treating the first material, a basic region indicating the relationship between strain and stress in the first material and a change region indicating a portion of the change in stress according to strain due to factors caused by pre-straining and heat treatment of the second material; and a simulation step of expressing the relationship between stress change and pre-strain amount in the change region as a Boltzmann function, and deriving the relationship between strain and stress due to the second material as the sum of the stress according to strain in the basic region and the change region.

## Description

### Technical Field

The present disclosure relates to an expression method of strength variation properties in plastic deformation of an elastic material, for accurately obtaining a stress-strain curve as an equation with respect to a material subjected to heat treatment.

### Background Art

Plastic deformation generated in parts during forming of the parts occurs prior to plastic deformation generated during a collision, and is referred to as pre-strain.

In a coating process, drying is performed through a baking process (heat treatment) in order to improve paint adhesion. For example, in order to strengthen paint adhesion during the painting process, automotive parts are assembled and then subjected to the baking process. In general, automotive steel in an unformed state exhibits little change in strength during a baking process; however, when the baking process is performed after plastic deformation has been introduced by a forming process, the strength of the material generally increases significantly. Since such strength changes affect crash performance, it is necessary for automotive manufacturers to consider changes in physical properties caused by pre-strain and the baking process in crash analysis during vehicle design. However, since it is difficult to derive equations for data on physical properties caused by the pre-strain and the baking process, it is necessary to analyze crash by expressing relatively accurate physical properties even in such cases.

(Patent Document 1) KR10-2020-0118162 (September 15, 2020)

### Summary of Invention

### Technical Problem

An aspect of the present disclosure is to provide an expression method of strength variation properties in a material subjected to pre-strain and a baking process, using an Equation, when plastic deformation is present.

### Solution to Problem

To achieve the above object, the present disclosure provides an expression method of strength variation properties formed as follows.

According to an aspect of the present disclosure, an expression method of strength variation property in a first material, and a second material obtained by subjecting the first material to pre-strain and heat treatment, the expression method comprising: a region setting step of setting a basic region indicating a relationship between strain and stress in the first material and a change region indicating a stress variation section according to strain due to factors caused by pre-straining and heat treatment of the second material; and a simulation step of expressing a relationship between a stress change in the change region and a pre-strain amount as a Boltzmann function, and deriving a relationship between strain and stress of the second material as a sum of stresses according to strain in the basic region and the change region.

### Advantageous Effects of Invention

According to an aspect of the present disclosure, through the structure described above, it is possible to relatively accurately express a strength change in a material due to pre-strain and a baking process of a base material.

In addition, by enabling crash analysis in consideration of the strength change in the material, such as in the automotive coating process, it is possible to improve the design accuracy of finished products such as automobiles.

### Brief Description of Drawings

FIG. 1 illustrates a true stress-true strain curve for a material with pre-strain and a baking process (heat treatment).
FIG. 2 illustrates a flowchart of an expression method of strength variation properties according to an example embodiment of the present disclosure.
FIG. 3 illustrates the relationship between true strain and true stress expressed by an equation according to an example embodiment of the present disclosure.
FIG. 4 illustrates an amount of increase in material strength depending on pre-strain when heat treatment is performed while varying the pre-strain at an effective plastic strain of 0.2.
FIG. 5 illustrates a graph illustrating the Boltzmann function.
FIG. 6 illustrates the relationship between elongation and stress of a material having an upper yield point and a lower yield point.
FIG. 7 illustrates a graph comparing test results obtained when the pre-strain and heat treatment conditions of a certain material vary with an equation expressed according to an example embodiment of the present disclosure.
FIG. 8 illustrates a graph comparing the test results obtained when the pre-strain and heat treatment conditions of a certain material different from the material of FIG. 7 vary with the equation expressed according to an example embodiment of the present disclosure.
FIG. 9 illustrates a graph comparing the test results obtained when the pre-strain and heat treatment conditions of a certain material different from the materials of FIGS. 7 and 8 vary with the equation expressed according to an example embodiment of the present disclosure.
FIG. 10 schematically illustrates a shape of a hat-shaped specimen.
FIG. 11 is a graph showing a load curve when a crush test is performed using the hat-shaped specimen as in FIG. 10, which compares the case of a first material, the case in which only work hardening is considered, and the case in which an equation derived using an expression method according to an example embodiment of the present disclosure is considered.
FIG. 12 is a graph showing an absorbed energy curve when the crush test is performed using the hat-shaped specimen as in FIG. 10, which compares the case of the first material, the case in which only the work hardening is considered, and the case in which the equation derived using the expression method according to an example embodiment of the present disclosure is considered.

### Best Mode for Invention

Specific example embodiments of the present disclosure will be described below with reference to the attached drawings. However, it should be noted that the spirit of the present disclosure is not limited to the example embodiments set forth herein and those skilled in the art and understanding the present disclosure can easily accomplish retrogressive inventions or other example embodiments included in the spirit of the present disclosure by the addition, modification, and removal of components within the same spirit, but those are construed as being included in the spirit of the present disclosure.

### Mode for Invention

In addition, in describing the present disclosure, "~ unit" or "~ module" may be implemented by various methods, for example, a processor, program instructions executed by the processor, a software module, a microcode, computer program products, a logic circuit, an application-specific integrated circuit, firmware, and the like.

The method disclosed in example embodiments of the present application may be directly implemented by a hardware processor, or may be implemented and executed through a combination of hardware and software modules of a processor, thereby being completed. The software module may be disposed in the conventional storage medium such as random access memory, flash memory, read-only memory, programmable read-only memory, electrically erasable programmable memory, or a register. The storage medium is located in a memory, and the processor reads information stored in the memory and, in combination with the hardware, completes the method described above. To avoid duplication, detailed descriptions are omitted here.

In the implementation process, each of the above-described methods may be completed by a logic integrated circuit of hardware or by instructions in the form of software. The method disclosed in example embodiments of the present application may be directly implemented by a hardware processor, or may be implemented and executed through a combination of hardware and software modules of a processor, thereby being completed. The software module may be disposed in the conventional storage medium such as random access memory, flash memory, read-only memory, programmable read-only memory, electrically erasable programmable memory, or a register. The storage medium is located in a memory, and the processor reads information stored in the memory and, in combination with the hardware, completes the method described above.

That is, those skilled in the art will understand that each exemplary unit and algorithm step described in the example embodiments disclosed in this specification may be realized by combining electronic hardware or by combining computer software and electronic hardware. Whether such functions are performed in a hardware manner or in a software manner is determined by the specific application and design constraints of the technical method. Those skilled in the art may realize the described functions using different methods for each specific application, but such realizations should not be considered outside the scope of this application.

In the examples provided in this application, it should be understood that the disclosed devices and methods may be realized in other ways. For example, the example embodiments of the device described above are merely illustrative. For example, the division of the units is merely a type of logical functional division, and other division schemes may exist in actual implementation. For example, a plurality of units or assemblies may be combined with or integrated into another system, or some features may be omitted or not performed. On the other hand, the coupling, direct coupling, or communication connection between each other as shown or discussed may be an indirect coupling or communication connection through an interface, device, or unit, and may be electrical, mechanical, or in other forms.

As described above, the units described as separate components may be physically separated, and the components represented as units may or may not be physical units, that is, they may be located in one place or distributed across a plurality of network units. Depending on actual demand, some or all of the units may be selected to realize the purpose of the solution of the present example embodiment.

That is, each functional unit in each example embodiment of the present application may be integrated into a single processing unit, each unit may exist independently, or two or more units may be integrated into a single unit.

When the above function is implemented in the form of a software functional unit and is sold or used as an independent product, it may be stored in a computer-readable storage medium. Based on this understanding, the part of the technical solution of the present application that essentially contributes to the prior art, or a part of the above technical solution, may be implemented in the form of a software product. The computer software product is stored in a storage medium and includes instructions that cause a computer device (which may be a personal computer, a server, or a network device, etc.) to perform all or part of the steps of the method described in each example embodiment of the present application. The storage media described above include various media capable of storing program code, such as USB memory, mobile hard disk, read-only memory (ROM), random access memory (RAM), magnetic disk, or CD-ROM.

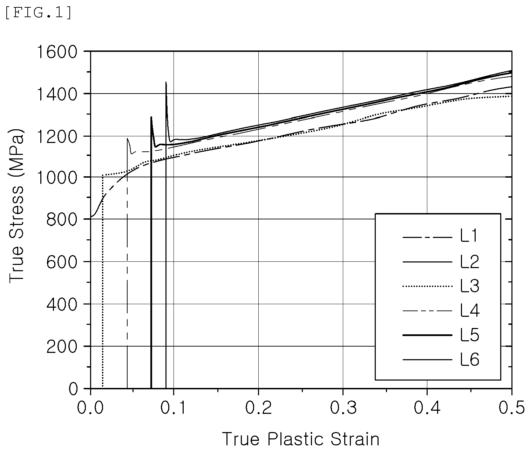

FIG. 1 is a graph of true stress-true strain, and illustrates a tensile curve for a case in which a strength change is present due to a base material, pre-strain, and a baking process.

All results were derived using specimens (980HB steel, specimens having a thickness of 1.6t) having the same material and thickness. The graphs are illustrated as follows: a case with no processing (L1); a case in which there is a pre-strain of 0% and heat treatment is performed (L2); a case in which there is a pre-strain of 2% and heat treatment is performed (L3); a case in which there is a pre-strain of 5% and heat treatment is performed (L4); a case in which there is a pre-strain of 8% and heat treatment is performed (L5); and a case in which there is a pre-strain of 10% and heat treatment is performed (L6).

Generally, when heat treatment is performed without pre-strain, the strength change is minimal; however, when the pre-strain is 2%, yield point elongation occurs, causing a significant increase in strength at an initial stage of deformation, after which the strength exhibits a value similar to that of the base material.

When the pre-strain further increases, a very large upper yield stress occurs in a transition section from an elastic section to a plastic section, and a subsequent work hardening curve also exhibits values greater than a predetermined level as compared to those of the base material. Overall, the upper yield stress occurs significantly when transitioning to the plastic region, after which the increase amount gradually decreases. The pre-strain of 2% or less results in a work hardening curve close to that of the base material, while the pre-strain of 5% or more results in a work hardening curve greater than that of the base material.

As illustrated in FIG. 1, even when using the same material, the characteristics of the material, in particular physical properties resulting from the strength change vary due to the pre-strain or the heat treatment process. Therefore, a method for accurately expressing the strength change is required.

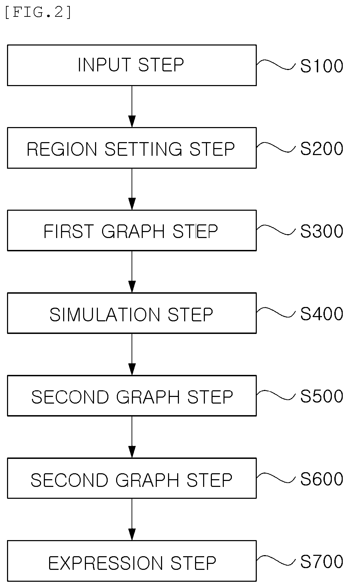

FIG. 2 is a flowchart of an expression method of strength variation properties according to an example embodiment of the present disclosure.

The expression method of strength variation properties according to an example embodiment of the present disclosure includes a region setting step (S200) and a simulation step (S400).

The present disclosure relates to a method for predicting strength variation properties for a second material, in which the second material is obtained by pre-straining and heat treatment of the first material.

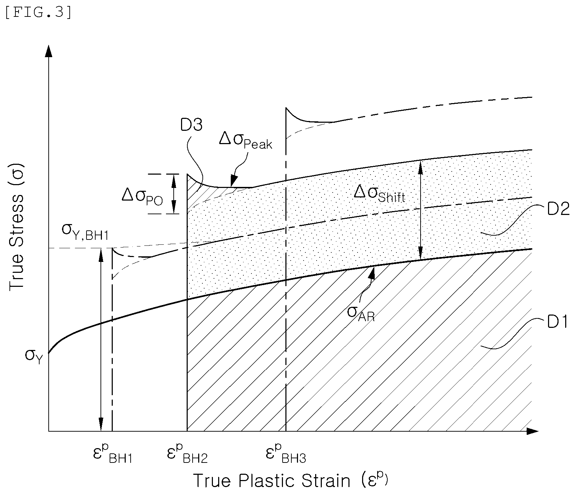

In the region setting step (S200), a basic region D1 (see FIG. 3) indicating the relationship between the strain and stress caused by the first material, and a change region D2 (see FIG. 3) representing a stress variation section according to strain caused by factors of pre-straining and heat treatment of the second material are set.

The first material relates to strain and stress of the base material, and the relationship between the strain and stress may be determined using previously experimental data. Therefore, information regarding the basic region may be obtained without experimentation by retrieving or receiving preset data.

For example, in the region setting step (S200), a correction region D3 (see FIG. 3) may be further set according to the initial strength increase and the stress decrease due to the yield point elongation of the second material. This correction region D3 may be further simulated and expressed by an equation in the following correction step (S600).

The simulation step (S400) is a step of expressing a relationship between a stress change in the change region D2 and a pre-strain amount as a Boltzmann function, and deriving a relationship between strain and stress of the second material as a sum of stresses according to strain in the basic region D1 and the change region D2.

The Boltzmann function relates to a probability distribution in statistical mechanics or mathematics that provides a probability that a system is in a specific state as a function of energy and temperature of the state. Such an equation is applied in the present disclosure to represent the strength change with respect to the pre-strain and heat treatment.

For example, a first graph step (S300) may be further included prior to the simulation step (S400).

The first graph step (S300) represents the stress change in the change region D2 due to the pre-strain amount and heat treatment as a first graph, and an equation for the change region D2 may be derived from this first graph.

In the first graph step (S300), a graph showing the relationship of the stress change with respect to the pre-strain amount of the second material is provided, the graph having a first slope, a second slope, and a third slope, in which an absolute value of the second slope is greater than an absolute value of the first slope and an absolute value of the third slope.

In the simulation step (S400), the change region D2 may be derived as an equation based on a third pre-strain amount, which is an intermediate value between a first pre-strain amount at which the second slope starts and a second pre-strain amount at which the second slope ends, and the second slope, a first stress value which is a stress value for the first pre-strain amount, and a second stress value which is a stress value for the second pre-strain amount. Thereafter, the relationship between the strain and stress change for the basic region D1 and the relationship between the pre-strain rate and the stress change in the change region D2 are combined. When combining the two regions, the pre-strain rate in the change region D2 may be linearly combined by treating the pre-strain rate together with the strain.

According to an example embodiment of the present disclosure, the correction step (S600) may be further included after the simulation step (S400).

In the correction step (S600), an equation for a correction region D3 is derived by expressing an initial strength increase according to the yield point elongation of the second material and a stress decrease occurring thereafter as a maximum increased stress and an exponential function, and the relationship between the strain and stress of the second material may be derived as a sum of the basic region D1 and the change region D2 in the simulation step S400 and a sum of an equation for the correction region D3.

Expressed by the following Equation 1, the relationship between the strain and stress of the second material may be expressed as the sum of the basic region D1 and the change region D2 in the simulation step (S400). Thereafter, in the correction step (S600), the relationship between the strain and stress of the second material may be derived by summing the equation for the correction region D3. Equation 1: $σ = {σ}_{AR} + Δ {σ}_{Shift} + Δ {σ}_{Peak}$

In the above Equation 1, σ represents the stress value according to the strain in the relationship between the strain and stress of the second material, σ_{AR} represents the stress value according to the strain of the first material as the relationship between the strain and stress of the basic region D1, Δσ_{shift} represents the stress value depending on the pre-strain amount changed depending on the pre-strain and heat treatment of the second material in the change region D2, and Δσₚₑₐₖ represents the stress value for the initial strength increase and the stress decrease occurring thereafter due to the yield point elongation of the second material according to the strain of the correction region D3.

Therefore, by deriving each equation as a linear equation as in Equation 1 above, the relationship between the strain and stress of the second material according to experimental or pre-stored data may be easily simulated and obtained using the above equations.

According to an example embodiment of the present disclosure, a second graph step (S500) may be further included prior to the above correction step (S600).

The second graph step (S500) may be a step of deriving a graph with a fourth slope, an upper yield point and a first elongation rate which is an elongation rate at the upper yield point, a lower yield point, and a second elongation rate which is an elongation rate at the lower yield point, with respect to the relationship of stress change according to yield point elongation of the second material. Since the second graph step is sufficient if performed before the correction step, it may be performed anywhere after the region setting step (S200) and before the correction step (S600).

The graph expressed in the second graph step (S500) is a process of deriving a graph that may simulate the reduction of stress after the upper yield point using the exponential function with respect to the upper yield point.

The expression method of strength variation properties according to an example embodiment of the present disclosure may further include an input step (S100) before the region setting step (S200).

The input step (S100) may include a first input step and a second input step.

The first input step is a step of receiving, as a value of the basic region, a relationship between stress and strain of the first material previously input, in which data obtained by experiment may be received, or values previously stored in a server or the like may be received.

The second input step may receive a graph obtained by experiment of a true strain-true stress relationship of the second material, or may retrieve the graph when the graph is stored in a server or the like. Alternatively, on a server or the like, data of the second material desired under the corresponding conditions may be linearly derived from the first material and a plurality of data obtained by pre-straining and heat treatment of the first material, and may be derived as a graph.

According to an example embodiment of the present disclosure, based on the information input in the input step (S100), the strength variation properties of the elastic material for the second material may be expressed as a specific equation through the region setting step (S200), the simulation step (S400), etc.

According to an example embodiment of the present disclosure, an expression step (S700) of deriving a graph of the summation derived after the simulation step (S400) or the correction step (S600) may be further included. By including the expression step (S700), the accuracy of the equation may be intuitively displayed to a user, etc.

In the following description, specific details regarding the simulation step (S400) and the correction step (S600) will be described.

FIG. 3 illustrates a graph of true strain and true stress expressed by an equation according to an example embodiment of the present disclosure.

The first line represented by a thick solid line is a graph of the true strain and true stress of the first material. Since there is no pre-strain or heat treatment process, it is a graph σ_{AR} denoting the plastic region after the yield point σ_{Y} without any significant change in strength.

The second line represented by a dotted line is the case in which the pre-strain is ε^{p}_{BH1}, and the yield stress has the value σ_{Y,BH1}.

The third line represented by a solid line is the case in which the pre-strain is ε^{p}_{BH2}.

The fourth line represented by a double chain line is the case in which the pre-strain is ε^{p}_{BH3}, and the yield stress has the value σ_{Y,BH3}.

Describing the expression method according to the present disclosure based on the third line, the section separated by the first line becomes the basic region D1, and the maximum section that may be covered by linearly deforming the first line, excluding the basic region D1 and having the trend of the first line, may be set as the change region D2. Furthermore, the remaining area may be set as a correction region D3 where the upper yield point and the stress decrease after the upper yield stress may be expressed as an exponential function.

When the stress at the upper yield point at this time is arbitrarily expressed as σ_{Y,BH2}, then σ_{Y,BH2} has the values of σ_{AR}, Δσ_{shift}, and Δσ_{PO} at a strain of ε_{pBH2}. Subsequently, the stress at the strain in a portion of the section where the correction region D3 is formed may be expressed as the sum of σ_{AR}, Δσ_{shift}, and Δσₚₑₐₖ. Furthermore, in the section where the correction region D3 is not formed, the stress may be expressed as the sum of σ_{AR} and Δσ_{shift}.

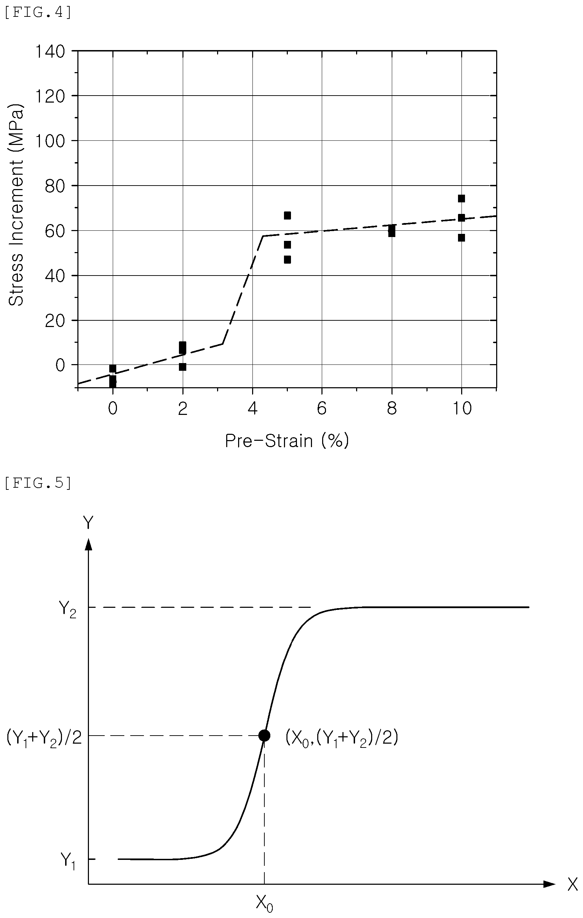

FIG. 4 is a graph illustrating the strength change when the heat treatment is performed while varying the pre-strain of the same material. Measurements were taken under the same conditions with an effective plastic strain of 0.2 for 980HB steel. FIG. 5 is a graph illustrating the Boltzmann function.

Equation 1 of the simulation step (S400) according to an example embodiment of the present disclosure will be described with reference to FIGS. 4 and 5.

As may be seen in the graph of FIG. 4, when the pre-strain is present, the increase in strength has a characteristic of changing rapidly at about 2 to 5% of pre-strain. Therefore, a method for accurately representing a change in physical properties, particularly in this section is required.

According to an example embodiment of the present disclosure, the strength change in the case in which there is a rapid change depending on the pre-strain and the heat treatment process as illustrated in FIG. 4 may be simulated using the form of the Boltzmann function as illustrated in FIG. 5.

FIG. 5 is a graph illustrating the Boltzmann function, and may represent the case in which there is the transition section, which is a section where the value of the y-axis changes rapidly according to the change in the x-axis, as an equation. The Boltzmann function is expressed as Equation 2 below. Equation 2: $y = {y}_{1} + \frac{{y}_{2} - {y}_{1}}{1 + {e}^{\left({x}_{0}-x\right) / κ}}$

Here, y1 represents a y-value before the transition section, y2 represents a y-value after the transition section, x0 represents an x-axis value at a midpoint between y1 and y2, which is the midpoint of the transition section, and k represents a slope of the transition section.

When this is applied to a case in which there is the strength change due to the pre-strain and heat treatment in the form of a graph as illustrated in FIG. 4, it may be derived as shown in Formula 1 below. Formula 1: $Δ {σ}_{Shift} = {σ}_{Δ , min} + \frac{{σ}_{Δ , max} - {σ}_{Δ , min}}{1 + {e}^{\left({ε}_{tran 1}-min\left({ε}_{BH}^{p}, {ε}_{BH , Max}\right)\right) / {κ}_{1}}}$

(Here, Δ_{σshift} represents the strain and stress for the change region as a value for the increase in strength due to the pre-strain and heat treatment, σ_{Δ,min} represents the first stress value, σ_{Δ,max} represents the second stress value, εₜᵣₐₙ₁ represents the third pre-strain amount, ε^{p}_{BH} represents a variable as the pre-strain amount, ε_{BH,Max} represents a maximum value of the pre-strain amount, and K₁ represents a value of the second slope.)

According to an example embodiment of the present disclosure, σ_{Δ,min} represents the first stress value and σ_{Δ,max} represents the second stress value, which may also be expressed as a linear equation depending on the pre-strain amount. This may represent the following Equation 3 and Equation 4. Equation 3: ${σ}_{Δ , min} = a + b min \left({ε}_{BH}^{p}, {ε}_{BH , Max}\right)$ Equation 4: ${σ}_{Δ , max} = c + d min \left({ε}_{BH}^{p}, {ε}_{BH , Max}\right)$

In Equations 3 and 4, σ_{Δ,min} represents the first stress value, σ_{Δ,max} represents the second stress value, ε^{p}_{BH} represents a variable representing the pre-strain amount, ε_{BH,Max} represents the maximum value of the pre-strain amount, and a, b, c, and d represent coefficients.

When Equations 3 and 4 are substituted into Formula 1 above, Formula 1 is derived as a function of the stress value depending on the pre-strain amount.

In the simulation step (S400), the relationship between the pre-strain amount and stress for the change region may be derived in the manner described above. Furthermore, by correlating the pre-strain amount of the change region with a kind of elongation rate, the equation derived in the simulation step (S400) or the graph expressed by the equation may be expressed as an equation related to the elongation rate and stress of the second material as a linear sum of the equations or graphs for the basic region.

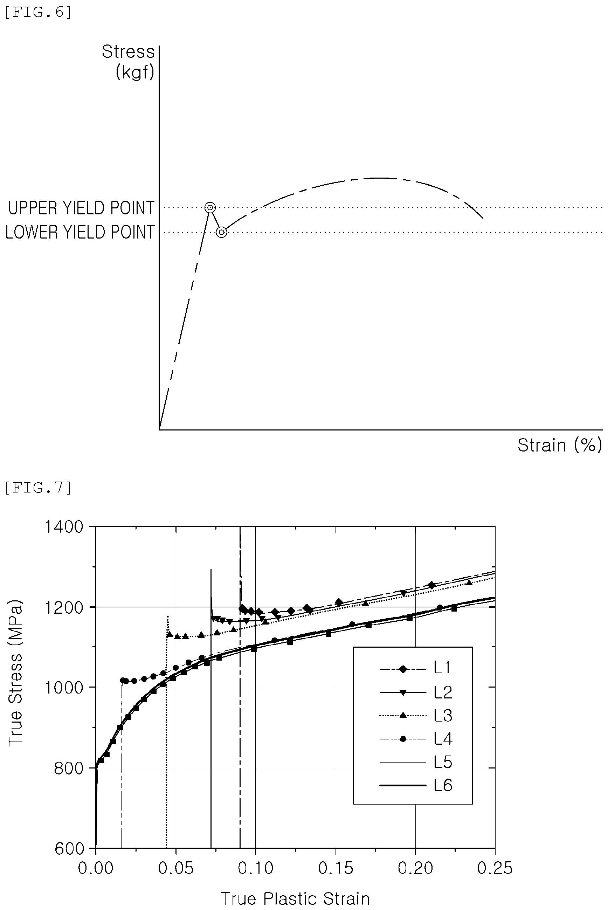

FIG. 6 illustrates the relationship between the elongation rate and stress to describe the upper yield point and the lower yield point.

Depending on the material, there may be the case in which the upper yield point and the lower yield point exist. Generally, for hard and tough materials, the upper yield point is formed, followed by the lower yield point due to a subsequent decrease in strength, and the material may exhibit a fracture pattern.

When the first material is transformed into the second material by the pre-strain and heat treatment, the second material is harder and tougher than the first material, and thus has the upper yield point, and the section where the stress decreases after the upper yield stress may be formed.

According to an example embodiment of the present disclosure, when such an upper yield point is obtained due to the pre-strain or heat treatment, the region may be represented as the correction region D3 in FIG. 3.

For example, with respect to the correction region D3, an equation may be derived in which the initial strength increase and the stress decrease according to the yield point elongation of the second material are expressed as an increased stress at an upper yield point and a stress decrease represented by an exponential function.

Alternatively, an equation may be derived as an equation related to the third elongation rate, which is an intermediate value between the first elongation rate and the second elongation rate, the fourth slope, and the upper yield point. To express this specifically, it may be represented as Formula 2 below. Formula 2: ${Δσ}_{Peak} = \frac{1}{{e}^{\left({ε}_{tran 2}-min\left({ε}_{BH}^{p}, {ε}_{BH , Max}\right)\right) / {k}_{2}}} {Δσ}_{p 0} {e}^{- \left({ε}^{p}-min\left({ε}_{BH}^{p}, {ε}_{BH , Max}\right)\right) / {t}_{1}}$

Here, Δ_{σpeak} represents the strain and stress for the correction region due to the initial strength increase caused by the yield point elongation, Δσₚ₀ represents the increased stress value at the upper yield point, εₜᵣₐₙ₂ represents the third elongation rate, ε^{p}_{BH} represents a variable as the pre-strain amount when the pre-strain is present, ε_{BH,Max} represents the maximum value of the pre-strain amount, k₂ represents the fourth slope, and t₁ represents a coefficient.

For example, Δσₚ₀ may be expressed according to Formula 3 below. Formula 3: $Δ {σ}_{p 0} = {K}_{BH} {\left({ε}_{B 0}+min\left({ε}_{BH}^{p}, {ε}_{BH , Max}\right)\right)}^{m}$

Here, Δσₚ₀ represents the increased stress value at the upper yield point, K_{BH}, ε_{B0}, and m represent coefficients, ε^{p}_{BH} represents a variable as the pre-strain amount when the pre-strain is present, and ε_{BH,Max} represents the maximum value of the pre-strain amount.

When the above Formula 3 is substituted into Δσₚ₀ of the above Formula 2, Formula 2 is transformed into an equation for stress with respect to the correction region D3 according to the initial strength increase due to the yield point elongation, with the pre-strain amount as a variable.

By adding the equation derived for the correction region D3 with the sum of the basic region D1 and change region D2 obtained in the above simulation step (S400), the true stress value for the pre-strain amount may be obtained. In this case, the pre-strain amount may be the true strain.

In the method described above, the strength variation properties in the plastic deformation region of the elastic material is derived as a specific equation to relatively accurately express the strength change in the material according to the pre-strain and the baking process of the base material, and by applying the same, the crash analysis may be performed in consideration of the strength change in the material, such as in the painting process of the automobile, thereby providing an effect of improving design accuracy of a finished product such as an automobile.

In addition, according to an example embodiment of the present disclosure, there may be provided a recording medium that records a computer-readable program for executing the above method.

FIGS. 7 to 9 illustrate physical property models and experimental values under various conditions of the second material when each first material is different.

FIGS. 7 to 9 illustrate graphs according to experiments in plastic deformation, in which a first material obtained by subjecting a steel of 980 MPa to different treatments is subjected to pre-strain and heat treatment under various conditions, and the graphs according to the experiments are illustrated as lines, and graphs drawn according to equations derived by this method are illustrated with both lines and shapes according to types of the lines.

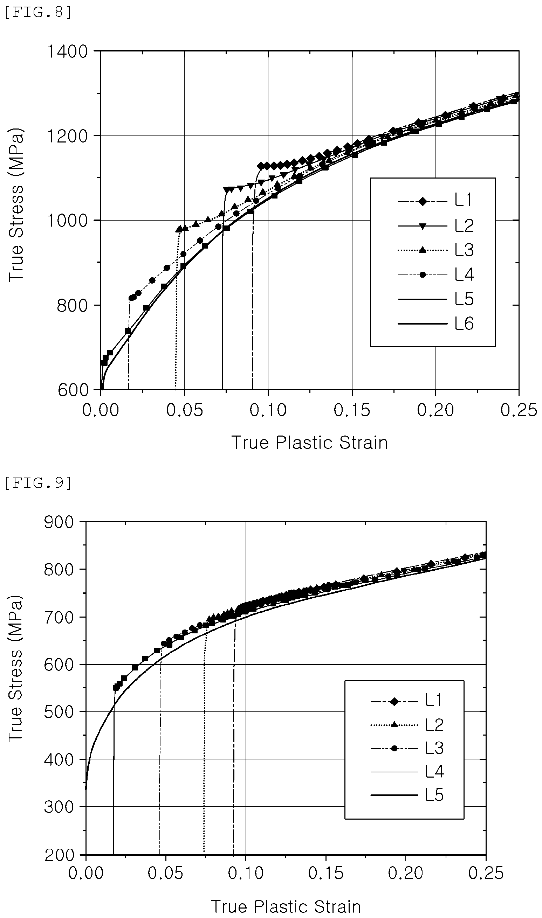

In FIGS. 7 and 8, L1 represents the case in which the pre-strain amount is 10%, L2 represents the case in which the pre-strain amount is 8%, L3 represents the case in which the pre-strain amount is 5%, L4 represents the case in which the pre-strain amount is 2%, and L5 represents the case in which the pre-strain amount is 0%, and the heat treatment was performed on L1 to L5. L6 is a graph of the first material, which is input in an input step (S100).

In FIG. 9, L1 represents the case in which the pre-strain amount is 10%, L2 represents the case in which the pre-strain amount is 8%, L3 represents the case in which the pre-strain amount is 5%, and L4 represents the case in which the pre-strain amount is 2%, and the heat treatment was performed on L1 to L4. L5 is a graph of the first material, which is input in an input step (S100).

As may be seen in FIGS. 7 to 9, even though the graphs have various conditions and forms, nearly similar results may be obtained when plotted with experimental values and values obtained by a method according to the present disclosure.

According to an example embodiment of the present disclosure, the expression step (S700) is further included to represent the sum equation derived after the simulation step (S400) or the correction step (S600) as a graph such as FIGS. 7 to 9, thereby enhancing intuitive understanding and making it easy for the user to verify the accuracy of the equation derived according to the present disclosure.

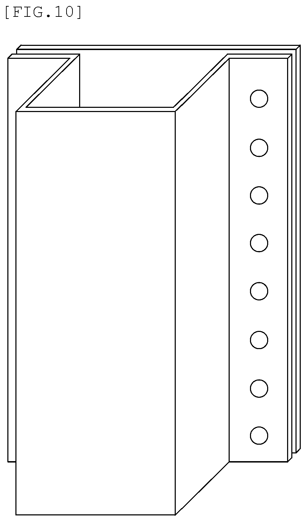

FIG. 10 schematically illustrates a hat-shaped specimen, and the load and absorbed energy may be analyzed by crushing a specimen such as FIG. 10.

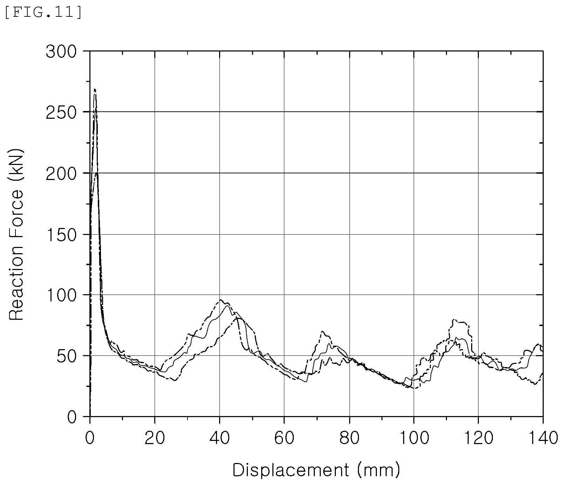

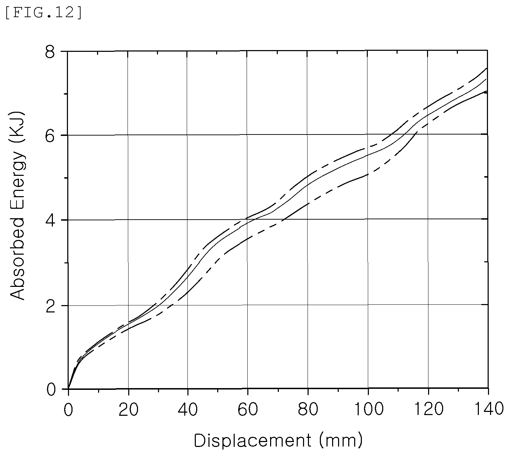

FIG. 11 is a load curve when a crush test is performed using a hat-shaped specimen as illustrated in FIG. 10, and FIG. 12 is an energy curve when a crush test is performed using a hat-shaped specimen as illustrated in FIG. 10.

According to an example embodiment of the present disclosure, the analysis results of collision load and absorbed energy in an automobile are shown for cases considering the pre-strain and heat treatment and cases considering only work hardening (heat treatment).

In FIG. 11, the dotted line is a graph analyzed with the first material, the dotted line is a graph analyzed considering the pre-strain and heat treatment according to an example embodiment of the present disclosure, and the solid line is the load curve when considering only the work hardening as in the conventional method.

In FIG. 12, the dotted line is a graph analyzed considering the pre-strain and heat treatment according to an example embodiment of the present disclosure, the solid line is a curve of absorbed energy when only the work hardening is considered as in the conventional method, and the dotted line is the curve of absorbed energy analyzed as the first material.

When analyzed as described above through the equation according to an example embodiment of the present disclosure, it is possible to exhibit a larger load and a higher energy absorption rate and to more accurately analyze a collision of an automobile, unlike the conventional method.

While example embodiments have been shown and described above, it will be apparent to those skilled in the art that modifications and variations could be made without departing from the scope of the present disclosure as defined by the appended claims.

## Claims

1. An expression method of strength variation property in a first material, and a second material obtained by subjecting the first material to pre-strain and heat treatment, the expression method comprising:
a region setting step of setting a basic region indicating a relationship between strain and stress in the first material and a change region indicating a stress variation section according to strain due to factors caused by pre-straining and heat treatment of the second material; and
a simulation step of expressing a relationship between a stress change in the change region and a pre-strain amount as a Boltzmann function, and deriving a relationship between strain and stress of the second material as a sum of stresses according to strain in the basic region and the change region.

2. The expression method of claim 1, further comprising:
prior to the simulation step,
a first graph step of plotting a graph having a first slope, a second slope, and a third slope with respect to the relationship of the stress change depending on the pre-strain amount of the second material,
the second slope having an absolute value greater than the first slope and the third slope;
wherein, in the simulation step, the change region is derived as an equation based on a third pre-strain amount, which is an intermediate value between a first pre-strain amount at which the second slope starts and a second pre-strain amount at which the second slope ends, and the second slope, a first stress value which is a stress value for the first pre-strain amount, and a second stress value which is a stress value for the second pre-strain amount.

3. The expression method of claim 2, wherein, in the region setting step, a correction region is further set according to an initial strength increase and a stress decrease due to yield point elongation of the second material, and
the expressing method further comprises a correction step of:
after the simulation step,
deriving an equation for the correction region by expressing the initial strength increase and the stress decrease due to the yield point elongation of the second material as a maximum increase stress and an exponential function; and
deriving the relationship between the strain and stress of the second material as the sum of the basic region and the change region of the simulation step and the sum of the correction region.

4. The expression method of claim 3, further comprising:
prior to the correction step,
a second graph step for deriving a graph with a fourth slope, an upper yield point and a first elongation rate which is an elongation rate at the upper yield point, a lower yield point, and a second elongation rate which is an elongation rate at the lower yield point, with respect to the relationship of stress change according to yield point elongation of the second material,
wherein, in the correction step, the correction region is derived by an equation related to a third elongation rate which is an intermediate value of the first elongation rate and the second elongation rate, the fourth slope, and the upper yield point.

5. The expression method of claim 2, wherein, in the simulation step, the change region is expressed by the following Formula 1. Formula 1: $Δ {σ}_{Shift} = {σ}_{Δ , min} + \frac{{σ}_{Δ , max} - {σ}_{Δ , min}}{1 + {e}^{\left({ε}_{tran 1}-min\left({ε}_{BH}^{p}, {ε}_{BH , Max}\right)\right) / {κ}_{1}}}$ where Δ_{σshift} represents the strain and stress for the change region as a value for the increase in strength due to the pre-strain and heat treatment, σ_{Δ,min} represents the first stress value, σ_{Δ,max} represents the second stress value, εₜᵣₐₙ₁ represents the third pre-strain amount, ε^{p}_{BH} represents a variable as the pre-strain amount, ε_{BH,Max} represents a maximum value of the pre-strain amount, and K₁ represents a value of the second slope.

6. The expression method of claim 4, wherein, in the correction step, the correction region is expressed by the following Formula 2. Formula 2: ${Δσ}_{Peak} = \frac{1}{{e}^{\left({ε}_{tran 2}-min\left({ε}_{BH}^{p}, {ε}_{BH , Max}\right)\right) / {k}_{2}}} {Δσ}_{p 0} {e}^{- \left({ε}^{p}-min\left({ε}_{BH}^{p}, {ε}_{BH , Max}\right)\right) / {t}_{1}}$ where Δ_{σpeak} represents the strain and stress for the correction region due to the initial strength increase caused by the yield point elongation, Δσₚ₀ represents the increased stress value at the upper yield point, εₜᵣₐₙ₂ represents the third elongation rate, ε^{p}_{BH} represents a variable as the pre-strain amount when the pre-strain is present, ε_{BH,Max} represents the maximum value of the pre-strain amount, k₂ represents the fourth slope, and t₁ represents an unknown.

7. The expression method of claim 6, wherein, in the correction step, Δσₚ₀ of Equation 2 is expressed according to Formula 3 below. Formula 3: $Δ {σ}_{p 0} = {K}_{BH} {\left({ε}_{B 0}+min\left({ε}_{BH}^{p}, {ε}_{BH , Max}\right)\right)}^{m}$ where Δσₚ₀ represents the increased stress value at the upper yield point, K_{BH} and ε_{B0} represent coefficients, ε^{p}_{BH} represents a variable as the pre-strain amount when the pre-strain is present, ε_{BH,Max} represents the maximum value of the pre-strain amount, and m is an unknown.

8. The expression method of claim 1, wherein the pre-strain amount is 2 to 5%.

9. A computer-readable recording medium on which a program for executing the method of any one of claims 1 to 8 is recorded.
